## Europäisches Patentamt
## European Patent Office
## Office européen des brevets

(11) Numéro de publication: **0 101 658**
**B1**

(12) **FASCICULE DE BREVET EUROPÉEN**

(45) Date de publication du fascicule du brevet:
**26.11.86**

(51) Int. Cl.⁴: **B 60 T 13/24**

(21) Numéro de dépôt: **83401597.6**

(22) Date de dépôt: **02.08.83**

(54) **Clé d'arrêt pour plongeur de valve de servomoteur d'assistance et servomoteur d'assistance équipé d'une telle clé.**

(30) Priorité: **20.08.82 FR 8214388**

(43) Date de publication de la demande:
**29.02.84 Bulletin 84/9**

(45) Mention de la délivrance du brevet:
**26.11.86 Bulletin 86/48**

(84) Etats contractants désignés:
**BE DE GB IT NL SE**

(56) Documents cité:
**DE-A-3 113 271**
**FR-A-2 051 722**
**FR-A-2 421 773**
**FR-A-2 456 021**
**FR-A-2 472 095**
**GB-A-2 076 488**
**GB-A-2 078 885**

(73) Titulaire: **BENDIX France, 126, rue de Stalingrad, F-93700 Drancy (FR)**

(72) Inventeur: **Morin, Gérard, 159 Rue Pasteur, F-77450 Conde Ste Libiaire (FR)**

(74) Mandataire: **Le Moenner, Gabriel, SERVICE BREVETS BENDIX 44, Rue François 1er, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

## Description

La présente invention concerne les servomoteurs d'assistance au freinage, et, plus particulièrement, les clés d'arrêt pour le plongeur de valve coulissant formant siège mobile pour la valve de distribution du servomoteur, actionné par la pédale de frein, classiquement via une tige d'actionnement.

Un servomoteur d'assistance au freinage classique, plus particulièrement du type à dépression, comprend, dans un boîtier hermétique, deux chambres séparées l'une de l'autre par un piston moteur à membrane susceptible d'actionner un maître-cylindre de freinage par déplacement à partir d'une position de repos, le piston moteur comportant un moyen de valve à trois voies actionnable par une tige de commande axiale reliée mécaniquement à la pédale de frein. Une première de ces chambres est destinée à être connectée à une source de vide disponible sur le véhicule, par exemple la dépression régnant dans le collecteur d'admission du moteur, le rôle du moyen de valve à trois voies consistant à mettre sélectivement la seconde chambre en communication avec la première chambre à vide ou avec l'atmosphère. Le moyen de valve comprend typiquement un élément de clapet annulaire mobile axialement, susceptible de venir alternativement en appui contre un siège mobile, formé à l'extrémité d'un plongeur solidaire de la tige de commande, et contre un siège annulaire formé autour du siège mobile par le moyeu du piston moteur dans lequel coulisse axialement le plongeur. Dans la position de repos du moyen de valve, l'élément de clapet annulaire est normalement maintenu élastiquement en appui contre le siège mobile, dans une configuration établissant une communication entre les deux chambres du boîtier. Par contre, le déplacement axial de la tige de commande provoque, à partir de la position de repos, un effacement du siège mobile de sorte que l'élément de clapet annulaire vient alors porter contre le siège annulaire du moyeu, ce qui a pour effet d'isoler les deux chambres l'une de l'autre et de mettre la seconde chambre en communication avec l'atmosphère. La différence de pression ainsi créée de part et d'autre du piston moteur provoque le déplacement de ce dernier pour l'actionnement du maître-cylindre de freinage.

Dans un tel agencement de servomoteur d'assistance, le plongeur de valve, qui coulisse dans un alésage du moyeu du piston moteur et qui forme généralement organe de poussée agissant directement sur la rondelle de réaction pour assurer le fonctionnement du dispositif en cas de défaut du système pneumatique, doit être retenu avec un jeu axial dans le moyeu de piston. En particulier, sa course de retour - vers la position de repos - doit être limitée par un organe d'arrêt afin de fixer le plus précisément possible la course morte du moyen de valve à l'ouverture, c'est-à-dire au début d'une phase de freinage.

Cette course morte est représentée physiquement par la distance axiale séparant - au repos - l'élément de clapet mobile du siège annulaire du moyeu du piston moteur. Or, la position de repos de l'élément de clapet mobile est imposée par le siège mobile contre lequel il est normalement sollicité élastiquement. Il est donc impératif de fixer avec la plus grande précision la position limite au retour du plongeur pour pouvoir réduire efficacement la course morte d'actionnement du servomoteur tout en conservant une levée de clapet suffisante entre l'élément de clapet et le siège annulaire dont la position de repos est déterminée par venue en butée, au retour, de l'équipage piston/membrane contre la face arrière du boîtier du servomoteur.

La position de repos du plongeur est classiquement déterminée par un organe de butée disposé dans le moyeu du piston moteur et contre lequel vient porter, en retour, une surface d'appui périphérique du plongeur. Originellement, cet organe de butée s'était inséré dans une fente radiale de la partie intérieure épaissie du moyeu et maintenu dans cette dernière par le bourrelet intérieur de la membrane solidarisée audit moyeu. Les exigences des constructeurs pour disposer d'ensembles servomoteur/maîtrecylindre plus compacts ont amené à dégager au maximum l'intérieur du boîtier du servomoteur, notamment pour y intégrer des longueurs de plus en plus importantes du maître-cylindre, et de déporter ainsi vers l'arrière l'équipage du moyen de valve, au niveau de la portion centrale de la paroi arrière du boîtier, le moyeu de piston-moteur s'étendant largement en saillie vers l'arrière du servomoteur, ce qui a amené à disposer l'organe de butée en un montage flottant dans une ouverture radiale de cette partie en saillie tubulaire du moyeu de piston-moteur.

Cet agencement général présente l'inconvénient de poser des problèmes pour ce qui est du maintien en place de l'organe de butée (appelé en l'occurence"clé d'arrêt") et pour ce qui est de la fixation précise du plan de référence de butée que doit constituer cette clé d'arrêt pour le plongeur.

La demande de brevet GB 2 078 885 (Toyota) décrit ainsi un tel agencement flottant de clé d'arrêt dans le moyeu de piston moteur, la clé étant maintenue en place dans une ouverture radiale de ce dernier par un ressort jarretière, la réduction de la course morte d'actionnement du servomoteur étant obtenue au prix de moyens additionnels assez complexes.

La demande de brevet GB 2 076 4B8 (Teves) décrit par ailleurs divers modes de réalisation pour solidariser extérieurement au moyeu du piston-moteur au moins un organe de butée ou d'arrêt du plongeur disposé dans une fente radiale du moyeu, sans toutefois garantir que la face de butée (avant) de cet organe soit effectivement maintenue plaquée contre la face adjacente - pouvant servir de face de référence - de la fente radiale dans laquelle l'organe de butée est reçu.

Or, comme sus-mentionné, il importe que l'organe de butée soit monté en place dans le moyeu de façon qu'il présente intérieurement (au niveau de sa zône de coopération en butée avec le plongeur) un jeu axial extrêmement faible, si possible nul, par rapport au moyeu pour que la course morte puisse être réduite et déterminée de façon précise en fonction des seules tolérances des éléments constitutifs du moyen de valve.

La demande de brevet français No. 2 051 722 (Bendix) décrit un montage où la clé d'arrêt en forme de U est prise en encastrement extérieur dans le piston moteur, lequel est toutefois constitué, dans ce document, d'un ensemble de deux parties assemblées par des tirants, suivant un agencement complexe de mise en oeuvre délicate.

La présente invention a donc pour objet de proposer un agencement simple, de faible coût de fabrication, d'une clé d'arrêt et d'un servomoteur agencé pour recevoir cette clé, permettant un montage simple, rapide et précis de la clé et autorisant une réduction notable de la course morte d'actionnement du servomoteur.

Pour ce faire, selon l'invention, la clé d'arrêt pour plongeur de valve de servomoteur d'assistance au freinage, du type destiné à être disposé dans une ouverture radiale du moyeu du piston-moteur du servomoteur pour coopérer en butée avec un épaulement d'un plongeur de valve du servomoteur coulissant dans ledit moyeu, et constituée d'un élément en forme de plaque comprenant une partie de corps de montage plane destinée à être reçue dans l'ouverture radiale et pourvue d'une extrémité profilée formant butée pour ledit épaulement (connu du document FR-A- 2 472 095, Fig 3-5), est caractérisée en ce que la partie de corps de montage comporte deux bords latéraux rabattus angulairement pour son montage sans jeu, légèrement à force, dans l'ouverture radiale.

Selon une caracteristique additionelle de l'invention, le servomoteur d'assistance au freinage, destiné à être pourvu d'une telle clé d'arrêt, et comprenant des première et seconde chambres séparées par un piston-moteur d'actionnement d'un maître-cylindre d'actionnement au freinage, le piston-moteur renfermant un moyen de valve à trois voies actionnable par une tige de commande pour mettre sélectivement la seconde chambre en communication avec l'atmosphère ou avec la première chambre, le moyen de valve comprenant un élément de clapet annulaire mobile axialement susceptible de venir alternativement en appui contre un siège mobile, formé par un plongeur solidaire de la tige de commande, et contre un siège annulaire formé par le moyeu du piston-moteur dans lequel coulisse axialement le plongeur, le plongeur comportant une partie cylindrique de diamètre réduit définissant au moins un épaulement annulaire dirigé vers l'élément de clapet, le moyeu comportant, au niveau de ladite partie de diamètre réduit du plongeur, une ouverture radiale destinée à recevoir la clé d'arrêt pour qu'elle coopère sélectivement en butée avec ledit épaulement lors du retour du moyen de valve vers sa position de repos, est caractérisé en ce que l'ouverture radiale a une section rectangulaire de dimension axiale constante sensiblement identique à l'épaisseur hors-tout de la clé.

Selon une autre caractéristique additionnelle de l'invention, une paroi axiale de l'ouverture radiale présente une saillie axiale s'étendant axialement dans cette ouverture radiale pour venir se loger en verrouillage dans une ouverture axiale formée dans la partie de corps de montage de la clé.

Le montage sans jeu axial de la clé dans le moyeu et son maintien verrouillée dans cette configuration par simple insertion radiale à ajustement juste dans l'ouverture radiale du moyeu permet ainsi de définir avec une grande précision la distance axiale entre la face de fermeture de l'élément de clapet annulaire et le plan de référence de butée en retour de l'épaulement du plongeur, c'est-à-dire de réduire, en fonction de la précision des tolérances de fabrication du moyeu et du plongeur, la course morte d'actionnement du servomoteur.

D'autres caractéristiques et avantages de la présente invention ressortiront de la description suivante d'un mode de réalisation, donné à titre illustratif mais nullement limitatif, faite en relation avec les dessins annexés, sur lesquels:

- la figure 1 est une vue schématique en coupe longitudinale d'un servomoteur d'assistance selon l'invention;

- les figures 2 à 4 sont des vues respectivement du dessus, de côté, et de face d'une clé d'arrêt selon l'invention;

- la figure 5 eat une vue en coupe partielle montrant la disposition de la clé d'arrêt dans l'ouverture radiale du moyeu de pistonmoteur; et

- la figure 6 illustre schématiquement les principales cotes et dimensions axiales du moyen de valve du servomoteur de la figure 1, vu en configuration de repos.

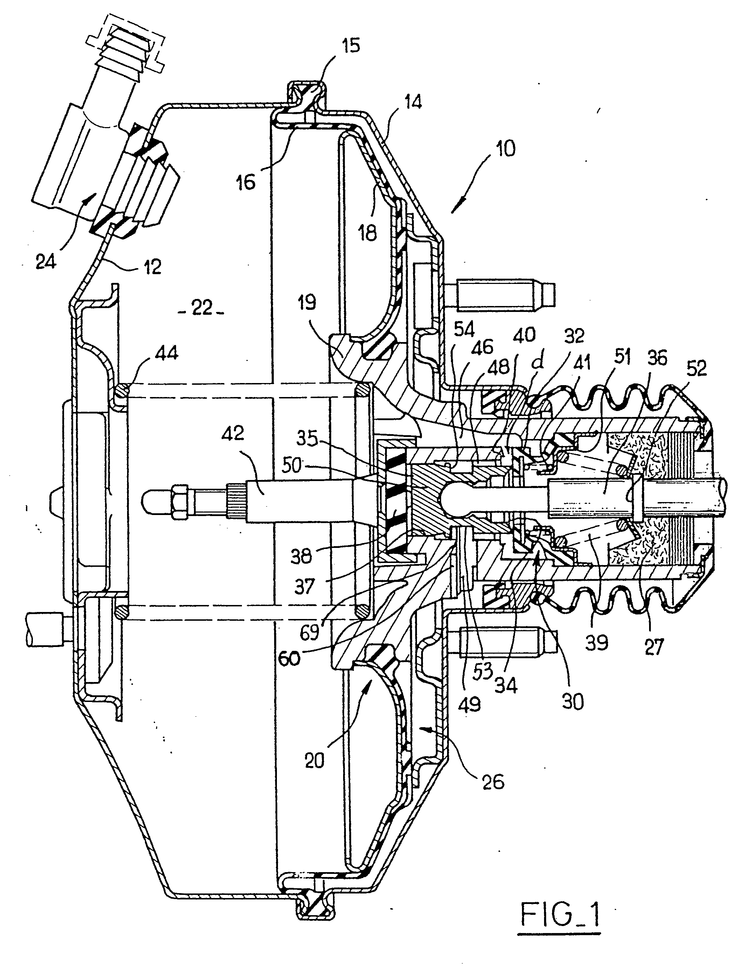

Comme représenté sur la figure 1, le servomoteur d'assistance au freinage comprend, classiquement, un boîtier 10 formé de deux coquilles 12 et 14 assemblées périphériquement de façon à enserrer le bourrelet extérieur 15 d'une membrane souple 16 constituant, en association avec un plateau rigide 18 et un moyeu tubulaire 19, un ensemble piston-moteur 20. De cette façon, le piston-moteur 20 divise le boîtier 10 en deux chambres, respectivement une première chambre ou chambre basse pression 22, destinée à être reliée en permanence à une source de vide par l'intermédiaire d'un embout de raccordement 24, et une seconce chambre ou chambre haute pression 26 susceptible d'être sélectivement mise en communication soit avec la première chambre 22, soit avec l'atmosphère via une bourre-filtre 27 disposée dans le moyeu 19. La partie tubulaire arrière en saillie du moyeu renferme un moyen de valve à trois voies 30 comprerant un clapet annulaire mobile 32, en matériau élastomère, susceptible de venir alternativement en appui axial, d'une part contre un siège annulaire mobile 34 formé à l'extrémité arrière d'un plongeur 50 solidaire de la tige de commande d'entrée 36 du servomoteur, destinée à être relié à la pédale d'actionnement de frein du véhicule (non représentée) et, d'autre part, contre un siège annulaire 40 défini centralement dans le moyeu 19 autour du siége mobile 34. Le moyeu 19 comporte un alésage axial 37 formant portée de coulissement axial pour le plongeur 50 qui se termine, à l'opposé du siège mobile 34, par une surface frontale d'appui 35 destinée à entrer en engagement avec un dispositif de réaction 38 constitué d'un disque en matériau élastomère. La face opposée du disque de réaction 38 coopère avec une tige de poussée 42 destinée à être connectée à un maître-cylindre de freinage (non représenté) pour l'actionnement des pistons de ce dernier. Un ressort 44 prend appui sur un renfort annulaire de la coquille avant 12 du boîtier pour solliciter le piston moteur 20 vers l'arrière,dans sa position de repos représentée sur la figure 1, en appui par exemple contre la coquille arrière 14. Lorsque le servomoteur est dans cette position de repos, la face d'appui avant 55 de l'élément de clapet mobile 32 est dégagée du siègeannulaire 40 d'une distance $\underline{d}$ de façon à permettre aux deux chambres 22 et 26 de communiquer l'une avec l'autre par l'intermédiaire de passages internes tels que 46, 48 et 49 formés dans le moyeu 19. Plus précisément, les passages longitudinaux 46 permettent une communication entre la première chambre 22 et l'ouverture du siège annulaire 40 tandis que les passages longitudinaux internes 48 et radiaux 49 permettent une communication entre la seconde chambre 26 et l'ouverture du siège annulaire 40. Dans la position de repos représentée, les deux chambres 22 et 26 communiquent l'une avec l'autre et sont donc toutes les deux en dépression, du fait que l'élément de clapet 32 est en appui étanche contre le siège 34 du plongeur 50 sous l'action de la différence de pression, du ressort de rappel de tige 39 et du ressort de sollicitation de clapet 41. Le ressort de rappel 39 est monté en compression entre une collerette d'appui 51 maintenant en place la base annulaire de l'élément de clapet 32 et un épaulement 52 de la tige de commande de sorte que le siège mobile 34 est normalement sollicité dans la direction de l'élément de clapet 32 qui lui même est sollicité axialement, dans la direction opposée, par le ressort 41 prenant également appui sur la collerette 51.

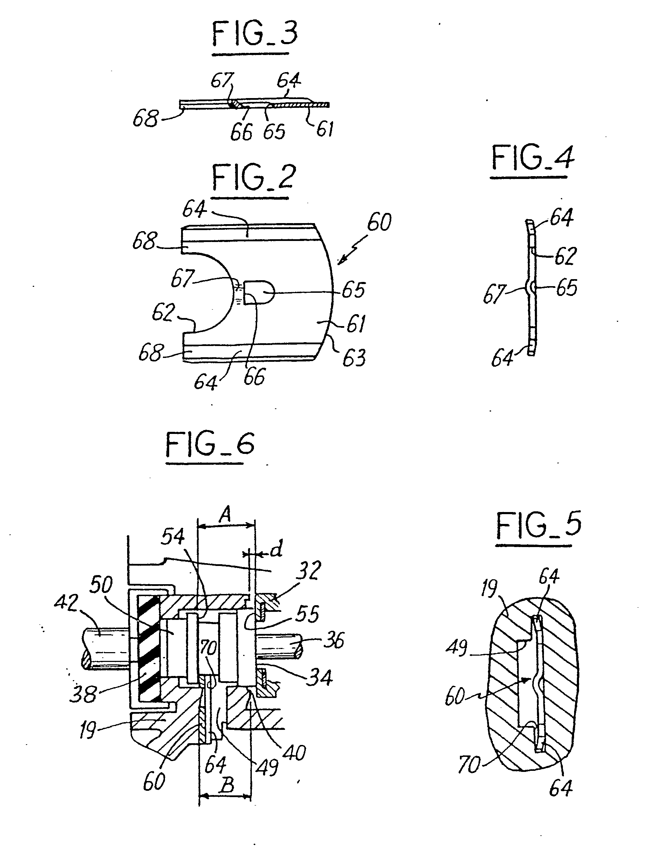

La position de repos du plongeur 50 représenté sur la figure 1 est déterminée par venue en butée d'un épaulement annulaire 54 du plongeur contre une clé d'arrêt 60 conformément à l'invention, montée dans une ouverture radiale 70 du moyeu communiquant avec la fenêtre de passage radial 49 (Figure 5).

La clé d'arrêt 60, réalisée par découpage et conformage d'une plaque métallique, comporte une partie de corps plane 61 découpée, à une extrémité, pour former un évidement semi-circulaire 62 de diamètre correspondant sensiblement au diamètre extérieur d'une partie de diamètre réduit médiane 53 du plongeur (en l'occurence une gorge) formant, à son extrémité avant, l'épaulement annulaire de butée 54 du plongeur 50. La découpe 62 forme ainsi deux pattes latérales 68 entourant la partie de diamètre réduit 53 pour augmenter la surface de butée avec l'épaulement 54. L'extrémité opposée de la partie de corps 61 a un profil arrondi 63 de rayon correspondant sensiblement au rayon extérieur du moyeu 19 au niveau de l'ouverture 70. Conformément à l'invention, l'ouverture 70 (Figure 5) a une section transversale rectangulaire de dimension axiale constante, la face avant de cette ouverture présentant avantageusement une saillie profilée en rampe 69 (Figure 1) s'étendant légèrement axialement dans l'ouverture 70 en direction vers l'arrière du moyeu. Les deux bords latéraux 64 de la clé d'arrêt 60 sont légèrement rabattus angulairement dans la même direction, comme on le voit bien sur la figure 4, ces bords rabattus intéressant également les pattes latérales 68 de la clé. De plus, la partie de corps 61 comporte centralement, légèrement au-dessous du fond de la découpe 62, une ouverture traversante 65 formant un bord d'arrêt droit supérieur 66. Comme on le voit sur la figure 4, la clé présente ainsi une face parfaitement plane formant le plan de butée pour l'épaulement 54 et maintenue plaquée contre la face adjacente de l'ouverture 70 dans laquelle la clé est montée légèrement à force, la largeur axiale de l'ouverture 70 étant constante et sensiblement identique à l'épaisseur normale hors-tout de la clé dont les pattes rabattues 64 forment les contre-appuis sur la portion latérale de la face axiale arrière de l'ouverture 70. Lors de l'insertion radiale de la clé 60 dans l'ouverture 70, la saillie 69 vient se loger dans l'ouverture 65 et, par butée de son bord supérieur avec le bord 66 de l'ouverture 65, empêche tout décrochenent accidentel de la clé, par exemple sous l'effet de vibrations. Pour faciliter l'insertion de la clé, le fond de la découpe 62 peut comporter une partie 67 localement repoussée dans la direction des bords latéraux rabattus 64 pour assister le passage du pont entre la découpe 62 et l'ouverture 65 par la saillie 69 du corps de moyeu.

Comme on le voit sur la figure 6, la clé 60 étant montée sans jeu dans l'ouverture 70, la cote B entre la face de référence avant de la clé 60 (sur laquelle vient buter l'épaulement 54) et le siège annulaire 40 peut être rapportée à la cote A entre l'épaulement 54 et la face arrière 34 formant siège de clapet du plongeur 50 pour déterminer ainsi la course morte $\underline{d}$ dont la valeur peut être ainsi réduite à une fourchette comprise entre par exemple 0,7 et 0,95 mm. Le moyeu 19 du piston- moteur 20 est généralement réalisé en matériau plastique rigide, typiquement en bakélite. La clé d'arrêt 60 est typiquement réalisée à partir d'une plaque d'acier de 1 mm traitée pour 340 à 410 HV et huilée. La clé a alors, bords latéraux compris, une épaisseur hors tout de 1,5 mm. L'épaisseur de la plaque peut être réduite, la rigidité de la clé étant alors assurée par des nervurages ou des bossellements en saillie du côté d'extension des bords rabattus.

### Revendications

1. Clé d'arrêt (60) pour plongeur de valve (50) de servomoteur d'assistance au freinage, du type destinée à être disposée dans une ouverture radiale (70) du moyeu (19) du piston-moteur (20) du servomoteur (10) pour coopérer en butée avec un épaulement (54) du plongeur de valve (50) coulissant dans ledit moyeu, la clé étant constituée d'un élément de plaque comprenant une partie de corps de montage (61) plane destinée à être reçue dans l'ouverture radiale (70) et pourvue d'une extrémité profilée (62) formant butée pour ledit épaulement (54), caractérisée en ce que la partie de corps de montage (61) comporte deux bords latéraux (64) rabattus angulairement pour son montage sans jeu légèrement à force dans l'ouverture radiale (70).

2. Clé selon la revendication 1, caractérisée en ce que la partie de corps de montage (61) comporte une ouverture axiale (65) destinée à recevoir une saillie axiale (69) d'une paroi axiale de l'ouverture radiale (70).

3. Clé selon la revendication 1 ou la revendication 2, caractérisée en ce que extrémité profilée présente une découpe semi-circulaire (62) définissant dans la partie de corps de montage (61) deux pattes d'extrémités (68) coplanaires à la partie de corps de montage (61).

4. Clé selon la revendication 2 et la revendication 3, caractérisé en ce que la partie de corps de montage (61) comporte, au niveau de la zone de raccordement entre le fond de la découpe semicirculaire (62) et l'ouverture axiale (65), une surface de rampe (67) de guidage pour ladite saillie (69).

5. Servomoteur d'assistance au freinage pourvu d'une clé d'arrêt selon l'une des revendications 1 à 4, comprenant des première (22) et seconde (26) chambres séparées par un piston-moteur (20) d'actionnement d'un maître-cylindre de freinage, le pistonmoteur renfermant un moyen de valve à trois voies (30) actionnable par une tige de commande (36) pour mettre sélectivement la seconde chambre (26) en communication avec la première chambre (22) ou l'atmosphère et comprenant un élément de clapet annulaire (32) mobile axialement susceptible de venir alternativement en appui contre un siège mobile (34) formé par un plongeur (50) solidaire de la tige de commande (36) du servomoteur et contre un siège annulaire (40) formé par le moyeu (19) du piston-moteur, dans lequel coulisse axialement le plongeur, le plongeur comportant une partie cylindrique (53) de diamètre réduit définissant au moins un épaulement radial (54) dirigé vers l'élément de clapet (32), le moyeu (19) comportant, au niveau de ladite partie de diamètre réduit (53) du plongeur (50), une ouverture radiale (70) destinée à recevoir la clé d'arrêt (60) pour qu'elle coopère sélectivement en butée avec ledit épaulement (54) lors du retour du moyen de valve (30) vers sa position de repos, caractérisé en ce que l'ouverture radiale (70) a une section rectangulaire de dimension axiale constante sensiblement identique à l'épaisseur hors-tout de la clé (60).

6. Servomoteur selon la revendication 5, caractérisé en ce qu'une paroi axiale de l'ouverture radiale (70) présente une partie en saillie (69) s'étendant axialement dans l'ouverture radiale (70).

7. Servomoteur selon la revendication 6, caractérisé en ce que la saillie axiale (69) est formée sur la paroi de l'ouverture radiale (70) dirigée vers l'élément de clapet (32).

8. Servomoteur selon la revendication 7, caractérisé en ce que l'ouverture radiale (70) communique centralement, du côté axialement opposé à la saillie axiale (69), avec une fenêtre radiale (49) du moyeu (19) formant passage d'écoulement de fluide entre la seconde chambre (26) et le moyen de valve (30).

### Patentansprüche

1. Anschlagteil (60) für den Ventilkolben (50) eines Servobremsmotors, der in einer radialen Öffnung (70) der Nabe (19) des Kolbens (20) des Servomotors (10) angeordnet ist, um sich an eine Schulter (54) des in der Nabe gleitenden Ventilkolbens (50) anzulegen, wobei das Anschlagteil von einem scheibenförmigen Element mit einem ebenen Montageabschnitt (61) gebildet wird, der in der radialen Öffnung (70) einsetzbar und mit einem profilierten Ende (62) versehen ist, das den Anschlag für die Schulter (54) bildet, dadurch gekennzeichnet, daß der Montageabschnitt (61) zwei seitliche Ränder (64) aufweist, die winkelmäßig umgebogen sind, um ihn spielfrei mit leichter Vorspannung in der radialen Öffnung (70) anzubringen.

2. Anschlagteil nach Anspruch 1, dadurch gekennzeichnet, daß der Montageabschnitt (61) eine axiale Öffnung (65) aufweist, die zur Aufnahme eines axialen Vorsprungs (69) einer axialen Wand der radialen Öffnung (70) dient.

3. Anschlagteil nach Anspruch 1 oder 2, dadurch gekennzeichnet, daß das profilierte Ende eine halbkreisförmige Ausnehmung (62) aufweist, die in dem Montageabschnitt (61) zwei zum Montageabschnitt (61) koplanare Zungen (68) definiert.

4. Anschlagteil nach Anspruch 2 und 3, dadurch gekennzeichnet, daß der Montageabschnitt (61) auf Höhe des Verbindungsbereiches zwischen dem Boden der halbkreisförmigen Ausnehmung (62) und der axialen Öffnung (65) eine rampenartige Führungsfläche (67) für den Vorsprung (69) aufweist.

5. Servobremsmotor, der mit einem Anschlagteil nach einem der Ansprüche 1 bis 4 versehen ist, mit einer ersten (22) und einer zweiten (26) Kammer, die von einem Kolben (20) zur Betätigung eines Hauptbremszylinders getrennt sind, wobei der Kolben ein Dreiwegeventil (30) umfaßt, das durch eine Betätigungsstange (36) betätigbar ist, um die zweite Kammer (26) mit der ersten Kammer (22) oder der Atmosphäre in Verbindung zu setzen, und das ein ringförmiges Ventilteil (32) aufweist, das axial beweglich ist, um sich an einen beweglichen Sitz (34), der von einem mit der Betätigungsstange (36) des Servomotors fest verbundenen Ventilkolben (50) gebildet wird, sowie gegen einen ringförmigen Sitz (40) anzulegen, der von der Nabe (19) des Kolbens gebildet wird, in welchem der Ventilkolben axial gleitet, wobei der Ventilkolben einen zylindrischen Abschnitt (53) verringerten Durchmessers aufweist, der zumindest eine auf das Ventilteil (32) gerichtete radiale Schulter (54) bildet, wobei die Nabe (19) auf Höhe des Abschnitts (53) verringerten Durchmessers des Ventilkolbens (50) eine radiale Öffnung (70) aufweist, die zur Aufnahme des Anschlagteils (60) dient, damit es sich an die Schulter (54) anlegen kann, wenn das Dreiwegeventil (30) in seine Ruhestellung zurückkehrt, dadurch gekennzeichnet, daß die radiale Öffnung (70) einen rechteckigen Querschnitt einer konstanten axialen Abmessung hat, die im wesentlichen gleich ist der Gesamtdicke des Anschlagteils (60).

6. Servobremsmotor nach Anspruch 5, dadurch gekennzeichnet, daß eine axiale Wand der radialen Öffnung (70) einen vorspringenden Abschnitt (69) aufweist, der sich axial in die radiale Öffnung (70) erstreckt.

7. Servobremsmotor nach Anspruch 6, dadurch gekennzeichnet, daß der axiale Vorsprung (69) an der Wand der radialen Öffnung (70) gebildet ist, die zum Ventilteil (32) hin gerichtet ist.

8. Servobremsmotor nach Anspruch 7, dadurch gekennzeichnet, daß die radiale Öffnung (70) zentral auf der dem axialen Vorsprung (69) gegenüberliegenden Seite mit einem radialen Fenster (49) der Nabe (19) in Verbindung steht, das eine Strömungsverbindung zwischen der zweiten Kammer (26) und dem Ventilteil (30) bildet.

**Claims**

1. A key (60) for a valve plunger (50) of a brake servo motor of the type adapted to be disposed in a radial opening (70) of the hub (19) of the piston assembly (20) of the servomotor (10) to cooperate in abutting relationship with a shoulder (54) of the valve plunger (50) sliding within said hub, the key being comprised of a plate element comprising a plane mounting body portion (61) adapted to be received within the radial opening (70) and provided with a profiled extremity (62) forming an abutment for said shoulder (54), characterized in that the mounting body portion (61) comprises two lateral edges (64) angularly rebent to be mounted without play and under a light force within the radial opening (70).

2. The key of claim 1, characterized in that the mounting body portion (61) comprises an axial opening (65) adapted to receive an axial projection (69) of an axial wall of the radial opening (70).

3. The key of claim 1 or claim 2, characterized in that the profiled extremity presents a semi-circular recess (62) defining in said mounting body portion (61) a pair of end portions (68) coplanar to the mounting body portion (61).

4. The key of claim 2 and claim 3, characterized in that the mounting body portion (61) comprises at the level of the junction zone between the bottom of the semi-circular recess (62) and the axial opening (65) a ramp surface (67) for guiding said projection (69).

5. A servo brake motor provided with a key according to any of claims 1 to 4, comprising first (22) and second (26) chambers separated by a piston assembly (20) for actuating a brake master cylinder, the piston assembly enclosing a three-way-valve means (30) actuatable by a control rod (36) selectively communicating the second chamber (26) with the first chamber (22) or the atmosphere, and comprising an annular valve element (32) axially movable to alternatively engage a movable seat (34) formed by a plunger (50) fixed to the control rod (36) of the servo motor, and an annular seat (40) formed by the hub (19) of the piston assembly wherein the plunger axially slides, the plunger comprising a cylindrical portion (53) of reduced diameter, defining at least one radial shoulder (54) directed towards the valve element (32), the hub (19) comprising at the level of said portion (53) of reduced diameter of the plunger (50) a radial opening (70) adapted to receive the key (60) such that it selectively cooperates in abutting relationship with said shoulder (54) when the valve means (30) returns towards its rest position, characterized in that the radial opening (70) is of a rectangular cross-section having a constant axial dimension substantially identical to the overall thickness of the key (60).

6. The servo motor of claim 5, characterized in that an axial wall of the radial opening (70) presents a projecting portion (69) axially extending into the radial opening (70).

7. The servo motor of claim 6, characterized in that the axial projection (69) is formed on the wall of the radial opening (70) directed towards the valve element (32).

8. The servo motor of claim 7, characterized in that the radial opening (70) communicates centrally, on the side axially opposite the axial projection (69), with a radial window (49) of the hub (19) forming a fluid flow passage between the second chamber (26) and the valve means (30).

FIG_1

## FIG_3

## FIG_2

## FIG_4

## FIG_6

## FIG_5